(19) Europäisches Patentamt

European Patent Office

Office européen des brevets

(11) **EP 1 602 939 A1**

(12) **EUROPEAN PATENT APPLICATION**

(43) Date of publication:
**07.12.2005 Bulletin 2005/49**

(51) Int Cl.⁷: **G01S 13/75**, G07C 9/00

(21) Application number: **05076301.0**

(22) Date of filing: **03.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **04.06.2004 NL 1026338**

(71) Applicant: **N.V. Nederlandsche Apparatenfabriek NEDAP**
**7141 DC Groenlo (NL)**

(72) Inventor: **Fockens, Tallienco Wieand Harm**
**7165 BR Rietmolen (NL)**

(74) Representative:
**Winckels, Johannes Hubertus F. et al**
**Vereenigde,**
**Johan de Wittlaan 7**
**2517 JR Den Haag (NL)**

(54) **System for detection, location and identification according to the FM-CW principle**

(57)     A radiographic location system utilizing the Frequency Modulated Continuous Wave (FM-CW) method, known from radar technology, combined with a label including a passive antenna whose impedance is modulated by means of a subcarrier which is generated in the label. In an extended embodiment, by means of modulation of the subcarrier, an identification number of the label is transferred to the interrogation unit. Fields of application: tracing runaway pets, movement registration of cattle, goods and humans, biological telemetry, etc.

Fig. 1

**Description**

The invention relates to uses in which locating animals is a key issue, optionally extended with an identification function. A first use concerns tracking freely moving small pets, such as cats. A second use is in dairy farming where, for instance, the movements of cows in a shed or in a pasture are to be recorded. A further use is in biological research, so-called biological telemetry, where it is required that the movements of particular animals in the free field can be followed.

All of these uses are about locating animals, goods and humans requiring that *inter alia* the distance of the object to one or more interrogation units can be wirelessly measured.

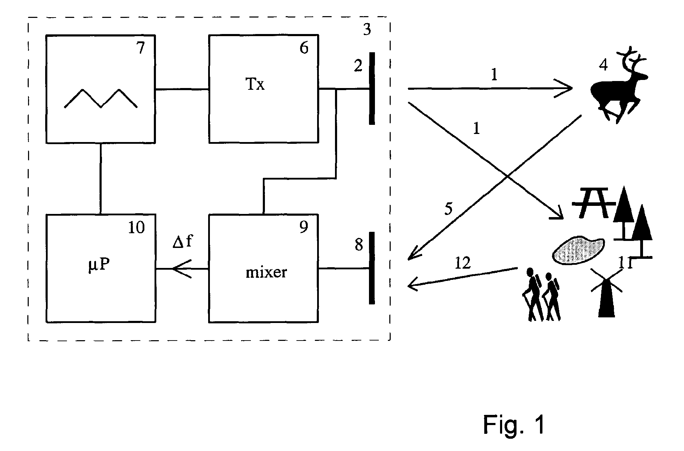

The invention utilizes a distance measurement method which is known from radar technology, viz. the Frequency Modulated Continuous Wave (FM-CW) method, see Fig. 1. In this method, a continuous carrier 1 is transmitted by transmitting antenna 2, being part of interrogation unit 3. Carrier 1 shifts in frequency uniformly. If the signal is reflected on an object or animal 4, the interrogation unit 3 will receive back a signal 5. Transmitter circuit 6 generates the carrier which is frequency-modulated in a sawtooth or triangle shape by transmitter modulator 7. At the time that the reflected signal arrives at receiving antenna 8, the interrogation unit 3 transmits a signal with a frequency which has meanwhile shifted. The two signals are multiplied by each other in a detector circuit 9, resulting in a signal with a difference frequency $\Delta f$. This difference frequency is proportional to the delay time of the signal, from transmitter to object and from object back to the receiver, hence proportional to the distance between transmitter/receiver and the object. Frequency measuring circuit and microprocessor 10 thus determines the distance, controls the interrogation unit and communicates results externally.

If the object has a radial velocity relative to the transmitter/receiver, further, a Doppler shift, proportional to that velocity, will occur. This Doppler shift is independent of the direction and the magnitude of the frequency sweep, and can thus be distinguished with respect to the frequency shift proportional to the distance, if both a frequency in upward direction and in downward direction is used. In the preferential embodiment of the invention, therefore, frequency sweeping will be done in a triangle shape.

The above method is suitable for objects that have a strongly reflecting power, such as ships and airplanes. However, the reflecting power of the body of an animal, or human, or that of most goods, is low, and is not distinctive with respect to materials 11 in the immediate environment. This means that a reflected signal of such an object is drowned in signals 12 reflected by the environment, which is referred to by the term 'clutter' in radar terminology.

The invention will be described in more detail with reference to the following figures:

Fig. 1 shows a diagrammatic representation of the known FM-CW radar principle.
Fig. 2 shows a diagrammatic representation of a first embodiment of a label as used in the invention.
Fig. 3 shows a diagrammatic overview of the various frequency components such as these are used in the invention.
Fig. 4 shows a block diagram of a first embodiment of an interrogation transmitter/receiver according to the invention.
Fig. 5 shows a diagrammatic representation of a second embodiment of a label as used in the invention.
Fig. 6 shows a block diagram of a second embodiment of an interrogation transmitter/receiver according to the invention.
Fig. 7 shows a diagrammatic representation of the monostatic configuration.
Fig. 8 shows a diagrammatic representation of the bistatic configuration.
Fig. 9 shows a block diagram of an interrogation transmitter in a bistatic configuration according to the invention.
Fig. 10 shows a block diagram of an interrogation receiver in a bistatic configuration according to the invention.
Fig. 11 shows a diagrammatic representation of a third embodiment of a label as used in the invention.
Fig. 12 shows a block diagram of an extended interrogation transmitter.

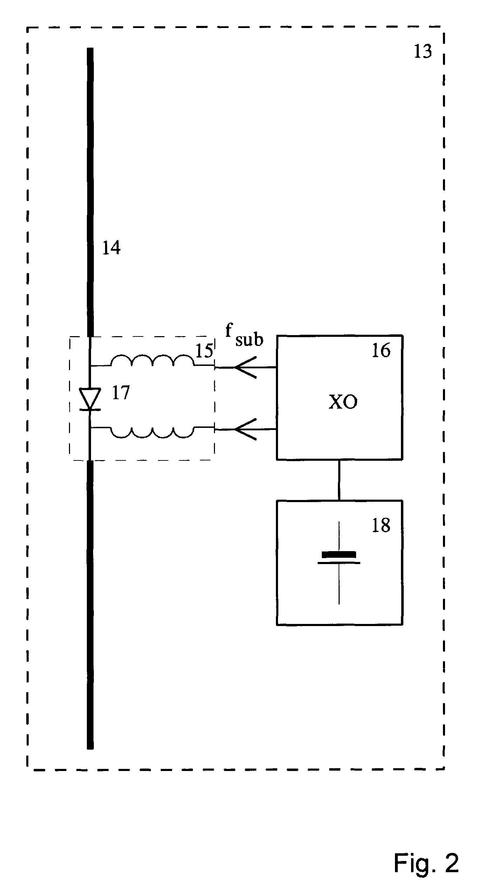

The object of the invention is to incorporate a modification in the known method, such that a clearly identifiable signal is reflected on an object. To that end, the object is provided with an electronic label. This label, schematically represented in Fig. 2 at numeral 13, comprises an antenna 14, for instance a dipole, functioning in the frequency band of the interrogation signal, a label modulator 15, and a signal source 16. This signal source generates a subcarrier $f_{sub}$, for instance 66.5 kHz, which is subsequently supplied to the label modulator. The modulator 15 comprises, for instance, a diode 17, which interconnects the two halves of the dipole antenna. Now, by alternately applying to the diode a forward voltage and then a voltage in the reverse direction, the diode is going to be conductive for the high-frequency voltage picked up by the dipole antenna, or is going to block. In this way, the impedance of the antenna is modulated in the rhythm of the subcarrier frequency. Battery 18 supplies the electronic circuit in the label.

If the transmitted signal of the interrogation unit is picked up by the antenna in the label, this antenna will re-radiate this signal. This phenomenon is called backscatter. The extent to which this occurs depends on the impedance of the antenna. Because the impedance has been modulated with the subcarrier frequency, the re-radiated signal will also be modulated with it. For the spectrum of the backscatter signal, this means that it consists of the original carrier frequency, having on opposite sides thereof two sideband frequencies, $f_{lsb}$ and $f_{usb}$, being, in spaced relation, equal to the subcarrier frequency of the carrier.

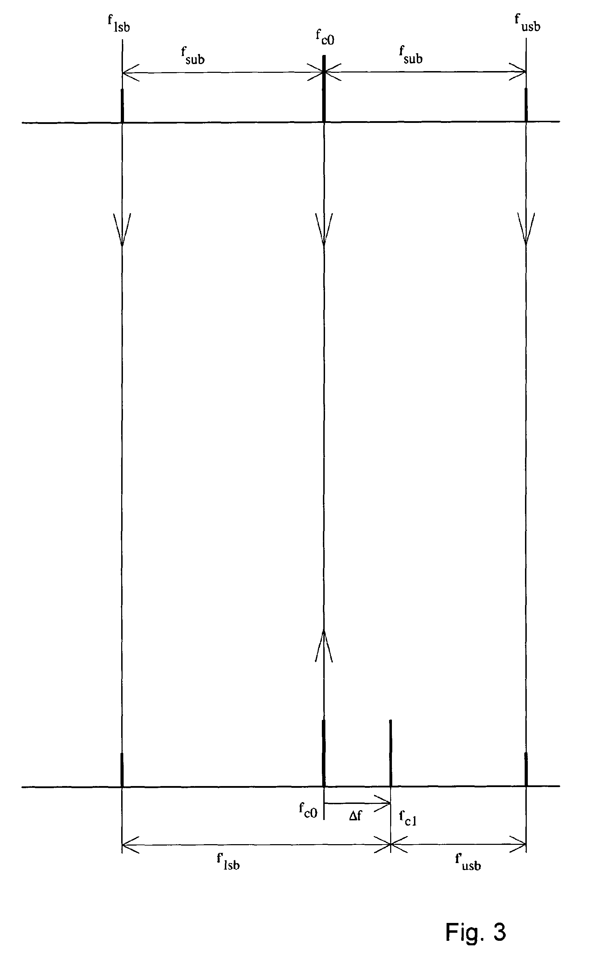

The receiver receives these two sideband components, and multiplies them by the carrier signal $f_{c1}$, which is transmitted at the time of reception. In the time interval between the transmission of the original carrier frequency $f_{c0}$ and the reception of the signal sent back by the label, the carrier frequency has shifted Δf Hz to $f_{c1}$. As a result, $f_{c1}$ stands asymmetrically in-between the two sideband frequencies $f_{lsb}$ and $f_{usb}$. See Fig. 3. The difference frequencies of the returned sideband frequencies and $f_{c1}$ are now $f'_{lsb}$ and $f'_{usb}$, respectively. In the situation where the transmitting frequency sweeps up uniformly, it now holds for $f'_{lsb}$ :

$$f'_{lsb} = f_{c1} - (f_{lsb} + f_{doppler})$$

$$= f_{c0} + \Delta f - (f_{c0} - f_{sub} + f_{doppler})$$

$$= f_{sub} + \Delta f - f_{doppler}$$

And for $f'_{usb}$:

$$f'_{usb} = f_{usb} + f_{doppler} - f_{c1}$$

$$= f_{c0} + f_{sub} + f_{doppler} - (f_{c0} + \Delta f)$$

$$= f_{sub} + f_{doppler} - \Delta f$$

The frequency difference $f_{up}$ between $f'_{lsb}$ and $f'_{usb}$ is:

$$f_{up} = f'_{lsb} - f'_{usb}$$

$$= 2\Delta f - 2f_{doppler}$$

$f_{up}$ is thus directly proportional to the distance, minus the Doppler shift $f_{doppler}$ resulting from the mutual, radial, velocity.

In the situation where the transmitting frequency sweeps down uniformly, it now holds for $f'_{lsb}$ :

$$f'_{lsb} = f_{c1} - (f_{lsb} + f_{doppler})$$

$$= f_{c0} - \Delta f - (f_{c0} - f_{sub} + f_{doppler})$$

$$= f_{sub} - \Delta f - f_{doppler}$$

And for $f'_{usb}$:

$$f'_{usb} = f_{usb} + f_{doppler} - f_{c1}$$

$$= f_{c0} + f_{sub} + f_{doppler} - (f_{c0} - \Delta f)$$

$$= f_{sub} + f_{doppler} + \Delta f$$

The frequency difference $f_{down}$ between f'$_{lsb}$ and f'$_{usb}$ is:

$$f_{down} = f'_{usb} - f'_{lsb}$$

$$= 2\Delta f + 2f_{doppler}$$

$f_{down}$ is thus directly proportional to the distance, plus the Doppler shift $f_{doppler}$ resulting from the mutual, radial, velocity.

If $f_{up}$ and $f_{down}$ are added up and the average value is determined, then the pure frequency shift as a result of the location, $f_{location}$, follows from:

$$f_{location} = \frac{f_{up} + f_{down}}{2}$$

$$= 2\Delta f$$

The traveled distance $d$, there and back again, then follows from:

$$d = 2\Delta f \frac{c}{v_{sweep}}$$

wherein $v_{sweep}$ is the sweep velocity in Hertz per second.

If $f_{up}$ and $f_{down}$ are subtracted from each other, the pure Doppler shift follows from:

$$f_{doppler} = \frac{f_{down} - f_{up}}{4}$$

The radial velocity $v_{radial}$ then follows from:

$$v_{radial} = - \frac{f_{doppler} * 300}{2 * f_{c0} \text{ [MHz]}}$$

wherein a positive $v_{radial}$ represents an outgoing movement (distance increasing), and a negative $v_{radial}$ an incoming movement (distance reducing).

It is therefore useful to sweep up as well as down in frequency. Accordingly, a ready solution is to realize the frequency sweep periodically in the triangle shape.

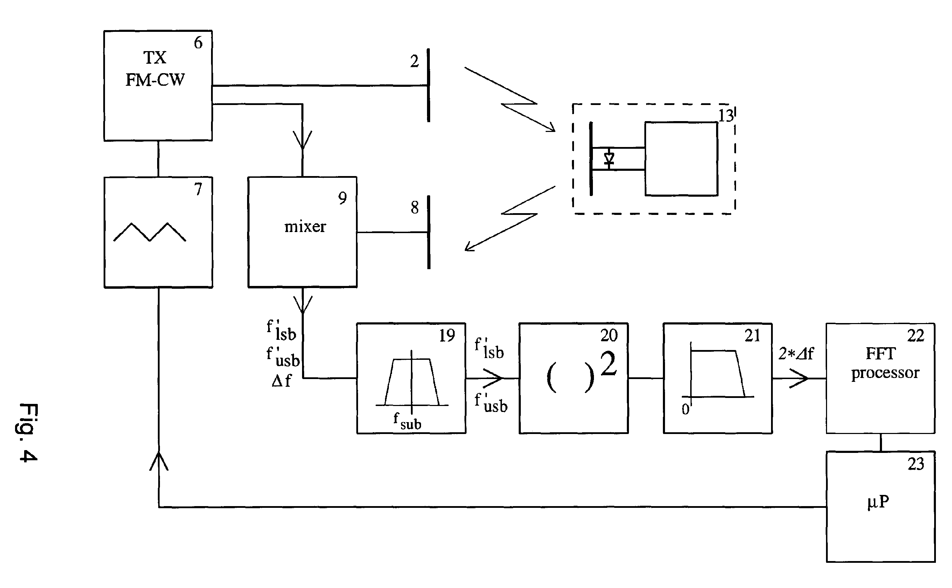

The receiver input according to the invention, see Fig. 4, comprises a mixer circuit 9 in which the received signals are multiplied by carrier $f_{c1}$, yielding at the output the difference frequency products f'$_{lsb}$, $\Delta f$, and f'$_{usb}$, as well as the sum products $f_{sc1} + f_{lsb}$, $f_{sc1} + f_{sc0}$, and $f_{sc1} + f_{usb}$. In band pass filter 19 the frequency components f'$_{lsb}$, and f'$_{usb}$ are passed. The sum products are removed, and so is $\Delta f$. In this way, then, all clutter is removed as well. The remaining signals come only from the label. These are supplied to a squaring circuit 20. The output signals thereof are in the difference frequency band containing 2\*$\Delta$f, and the sum frequency band containing 2\*f'$_{lsb}$, 2\*f'$_{usb}$, and f'$_{lsb}$, + f'$_{usb}$. Low pass filter 21 only passes the band with 2\*$\Delta$f to frequency measuring circuit 22. The frequency measurement can for instance, and preferably, be performed in a digital signal processing operation by means of an FFT (Fast Fourier Transform) program. Microprocessor 23 calculates the distance from the measured frequency data, controls the interrogation unit and communicates the results externally.

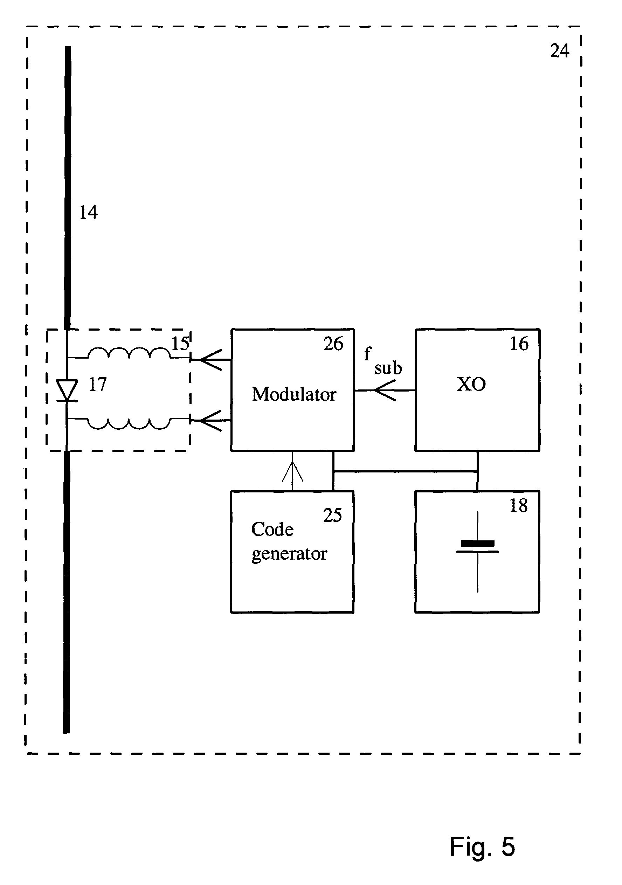

In the above-described method, only the distance between interrogation unit and label 13 is measured. All labels are identical in that regard, so that individual objects and animals cannot be distinguished. In some uses, this may be sufficient, but in other uses, for instance in a tracking system for a herd of cows in a pasture or shed, it is required that individual animals can be followed. To that end, in an extended label 24 - see Fig. 5 - the circuit is provided with a code generator 25 which includes a memory in which an identification number is stored, and a modulator 26 which modulates the identification number in binary form on the subcarrier. In principle, all modulation methods, as ASK (amplitude modulation), FSK (frequency modulation), and PSK (phase modulation), are useful. The preferential method, however, is binary differential PSK (Phase Shift Keying), whereby with phase jumps of 180 degrees, for instance, a logic 1 bit is indicated. This method gives rise to a simple circuit in the label, while constantly a subcarrier is present for the distance measurement. Moreover, after squaring of the f'$_{lsb}$, and f'$_{usb}$, from which the signal 2\*$\Delta$f is obtained, the phase jump of 180 degrees in both f'$_{lsb}$ and f'$_{usb}$ components is converted to a phase jump of 0 degrees in the 2\*$\Delta$f signal. In other words, in the signal with which the distance measurement is eventually performed, the phase modulation is gone again, so that the distance measurement is not influenced thereby.

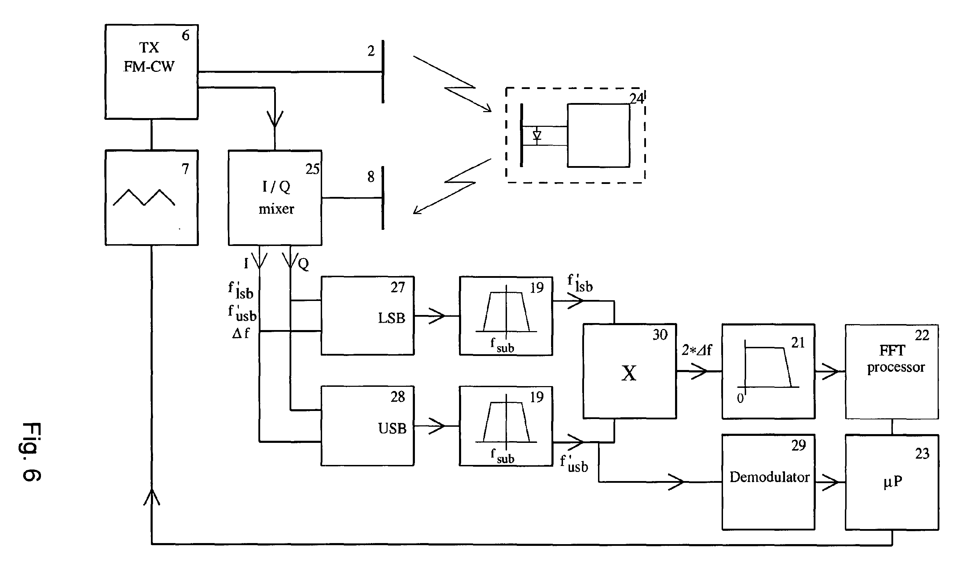

Fig. 6 shows the block diagram of the interrogation unit as conceived for the extended invention. As in Fig. 4, transmitting antenna 2 transmits an interrogation signal 1. Label 24 transmits this signal back, though modulated with subcarrier f$_{sub}$, which results in two sideband components, f$_{lsb}$ and f$_{usb}$. In label 24 the subcarrier is modulated through binary differential PSK with the identification number of the label. This phase modulation is subsequently also present on the two sideband components f$_{lsb}$ and f$_{usb}$. These sideband signal components are picked up by receiving antenna 8 and passed to quadrature mixer 25. This mixer circuit comprises two parallel mixers, which are supplied with local oscillator signals of equal frequency, but having a mutual phase difference of 90 degrees. Each mixer part has its own output, indicated with the I-channel and the Q-channel. In the circuit of Fig. 6 according to the invention, both the I signal and the Q signal are supplied to two phase shift networks 27 and 28. In network 27, the I signal is delayed by 90 degrees in phase with respect to the Q signal and then added up to each other. The reception of the upper sideband signal, f$_{usb}$, is blocked, so f'$_{usb}$ is suppressed, while the lower sideband signal, f$_{lsb}$, is received, thus resulting in signal f'$_{lsb}$. Conversely, in the phase shift network 28 the Q signal is delayed by 90 degrees in phase with respect to the I signal, which has as a result that f'$_{usb}$ is left. The net result is that the two signals f'$_{lsb}$ and f'$_{usb}$ are split. To filter the $\Delta$f signal from the mixer 25, both signals pass through a band pass filter 19.

Since both signals are phase-modulated with the identification number, it can suffice to supply either signal to phase demodulator 29. In it, the binary bit pattern is demodulated and microprocessor 23 can derive the identification number therefrom.

The two separated signals f'$_{lsb}$ and f'$_{usb}$ are also supplied to the input ports of multiplier circuit 30. As in the squaring circuit 20 in Fig. 4, upon the multiplication of f'$_{lsb}$ by f'$_{usb}$, the difference frequency component 2\*$\Delta$f becomes available. That signal is separated from the other mixed products by means of the low pass filter 21, and supplied to FFT processor 22. Microprocessor 23 calculates the distance from the measured frequency data, controls the interrogation unit and communicates the results externally.

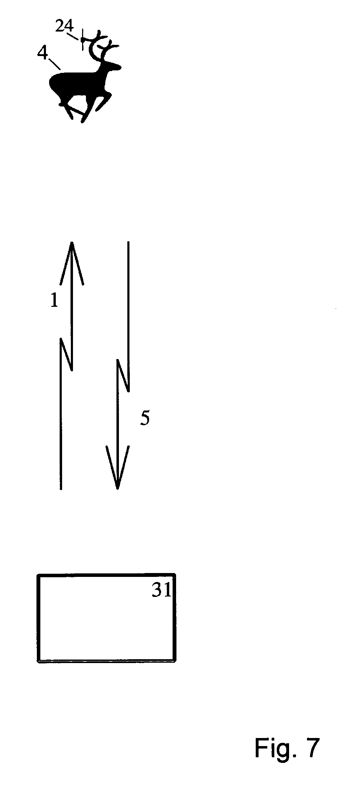

In the above-described two embodiments of the invention, the starting point is the so-called monostatic configuration: the transmitter and the receiver are in one and the same location and jointly form the interrogation unit, designated by numeral 31 in Fig. 7. The transmitted signal 1 reaches label 24, attached to animal 4, and the reply signal 5 passes by the same path back to the interrogation unit 31. The transmission path for the way there and the way back is equally long but of opposite direction. The length of these transmission paths is equal to the radial distance of the interrogation unit to the animal.

By providing the interrogation unit with rotating directional antennas, also the azimuthal direction from the interrogation unit to the animal can be determined. Together with the radial distance, in this way the position of the animal is determined.

The limitations of this embodiment reside in the given that the transmitting antenna is placed closely next to the receiving antenna. As a result, a strong transmitter signal leaks through directly to the receiving antenna. Not only does this impose high requirements on the dynamic range of the receiver input, but transmitter noise will penetrate into the receiver, and thereby in effect determine receiver sensitivity. This limits the net range of such a monostatic configuration to about 100 meters, utilizing a transmitting frequency of 865-868 MHz.

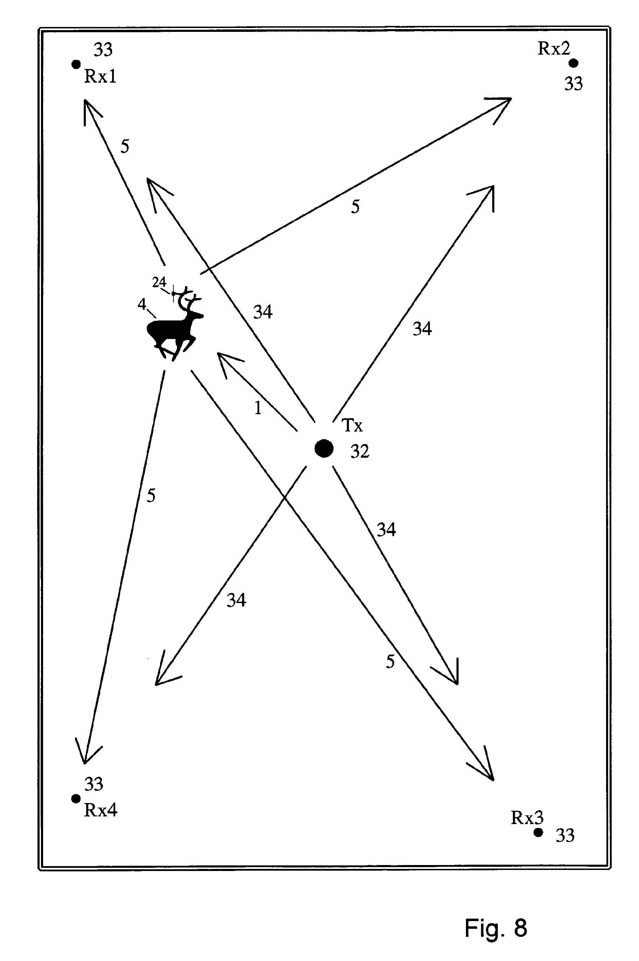

In another embodiment, a bistatic configuration is utilized. This involves a transmitter 32 being arranged centrally in the working area, see Fig. 8.
A number of receivers 33 are arranged around the transmitter, distributed over the working area. The receivers all receive the transmitter signal directly, for reference (34). In addition, the receivers receive a return signal 5 from the label 24, which is driven by transmitted signal 1.

The measuring principle for the determination of the location is now based on the measurement of the path length difference *d* between the direct path transmitter - receiver and the indirect path via the label on the animal. The geometric figure associated with a particular path length difference is a pair of hyperboles extending mirrorwise on opposite sides of the line transmitter - receiver.

Thus, the combination of the transmitter and a second receiver yields a second path length difference, and hence a second set of hyperboles. The same holds true for the other receivers. Thus, a minimum of three receivers are needed to enable the position of a label to be accurately determined over the entire area around the transmitter from the intersection of the hyperboles. These locating principles utilizing hyperboles are known from existing radio location systems such as DECCA and LORAN-C.

In this use also, by means of the measurement of the Doppler shift $f_{doppler}$ the velocity of the label can be determined. The velocity $v_{radial}$ as measured in one receiver is here a velocity component in the direction perpendicular (normal) to the hyperbole curve, $v_{normal}$. The combination of measured normal velocities in several receivers results in a velocity vector.

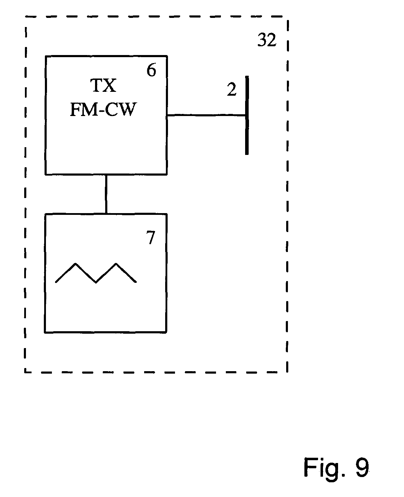

Fig. 9 shows the block diagram of the transmitter 32. It merely comprises the signal source and transmitter amplifier circuit 6, a sawtooth or triangle wave generator 7 and transmitting antenna 2.

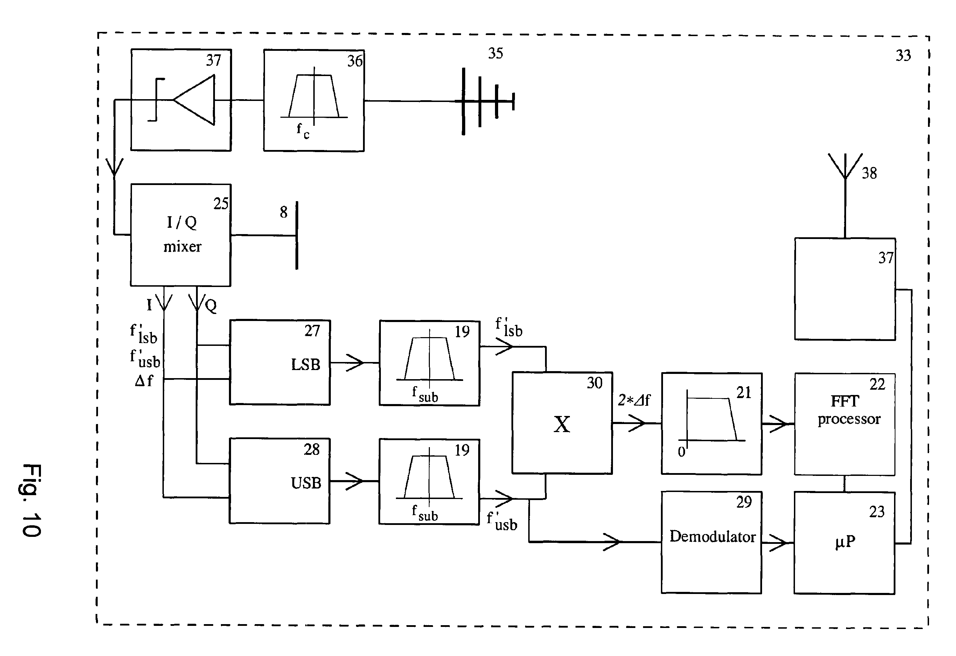

Fig. 10 shows the block diagram of the receiver 33. This receiver receives a reference signal from the transmitter 32. This signal is picked up by directional antenna 35, filtered by filter 36, tuned to the frequency sweep band of the transmitter, and is amplified and limited in 37. The output signal of this is used as local oscillator signal for quadrature mixer 25.

The sideband components of the label signal 5 are picked up by receiving antenna 8 and passed on to quadrature mixer 25. This mixer circuit comprises two parallel mixers, which are supplied with local oscillator signals of equal frequency, but having a mutual phase difference of 90 degrees. Each mixer part has an output of its own, indicated with the I-channel and the Q-channel. As in the circuit of Fig. 6, both the I and the Q signal are supplied to two phase shift networks 27 and 28. In network 27, the I signal is delayed in phase by 90 degrees with respect to the Q signal and then added up to each other. The reception of the upper sideband signal, $f_{usb}$, is blocked, so f'$_{usb}$ is suppressed, while the lower sideband signal, $f_{lsb}$, is received, thus resulting in signal f'$_{lsb}$. Conversely, in the phase shift network 28 the Q signal is delayed in phase by 90 degrees with respect to the I signal, which has as a result that f'$_{usb}$ is left. The net result is that the two signals f'$_{lsb}$ and f'$_{usb}$ are split. To filter the $\Delta f$ signal from the mixer 25, both signals pass through a band pass filter 19.

Since both signals are phase-modulated with the identification number, it can suffice to supply either signal to phase demodulator 29. In it, the binary bit pattern is demodulated and microprocessor 23 can derive the identification number therefrom.

The two separated signals f'$_{lsb}$ and f'$_{usb}$ are also supplied to the input ports of multiplier circuit 30. As in the squaring circuit 20 in Fig. 4, upon the multiplication of f'$_{lsb}$ by f'$_{usb}$ the difference frequency component $2*\Delta f$ becomes available. That signal is separated by means of the low pass filter 21 from the other mixed products, and supplied to FFT processor 22. Microprocessor 23 calculates the path length difference from the measured frequency data, controls the interrogation unit and communicates the results to a central processor, where on the basis of the measured path length differences, the label identification number, and the set-up data of transmitter and receivers, the location of the respective animal is determined.

The communication from the receiver to a central processor can also be designed to be wireless by means of a data transceiver 37 and datalink antenna 38.

If several labels according to the invention are disposed in the working area of the location system, mutual inference may occur if several labels simultaneously modulate their label with subcarrier $f_{sub}$. This problem is resolved by arranging for the subcarrier modulation not to be present constantly, but only during a fraction of the time, at times determined stochastically (ALOHA principle). In this way, of all labels present in the working area, the position and the identification number can be determined.

A further extended embodiment of the invention provides for data communication from the interrogation unit to the label. Possibilities of use are, for instance, the writing of information in a memory circuit in the label, executing a two-way communication protocol with the label, for instance for the purpose of a multilabel/anticollision protocol other than according to the ALOHA principle, or for the purpose of an authentication process.

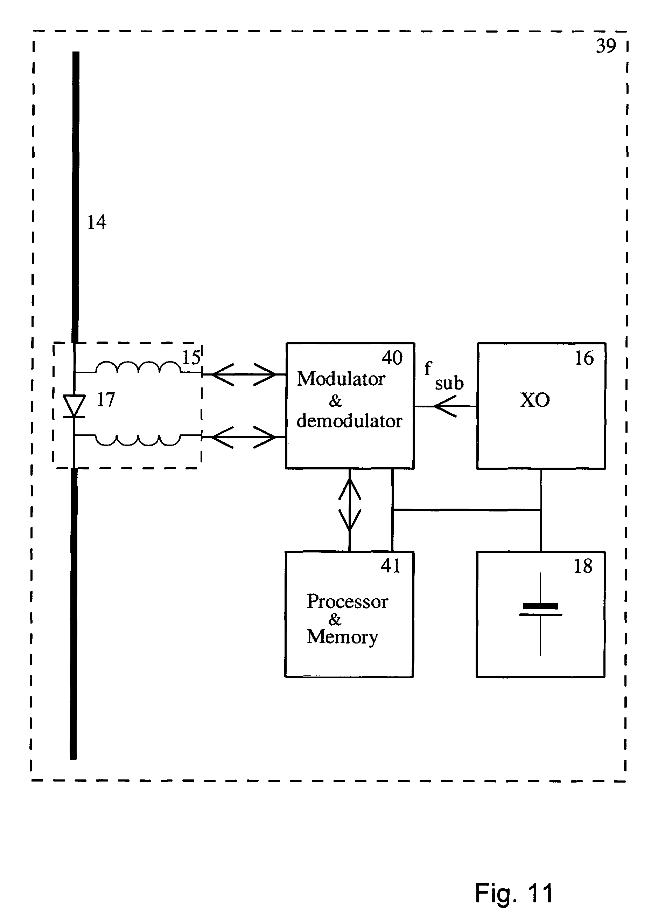

Fig. 11 shows a block diagram of a suitable embodiment of a label 39 for that purpose. The interrogation signal received by antenna 14, which has been amplitude-modulated with data to be sent to the label, is demodulated by diode 17. Owing to the relatively large distances between interrogation unit and label, the demodulated voltage presented to modulator and demodulator circuit 40 will be low. Circuit 40 amplifies and conditions this demodulated signal, and presents it to processor and memory circuit 41. Depending on the use, circuit 41 will store data, and/or execute a communication protocol or authentication protocol.

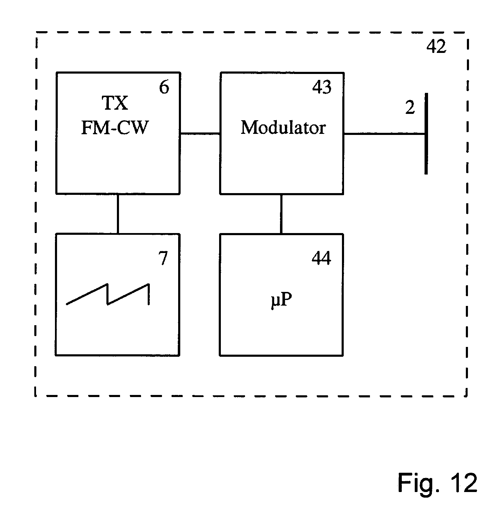

Fig. 12 shows the extended circuit of the interrogation transmitter 42. Compared with the transmitter circuits in Figs. 4, 6 and 9, a modulator circuit 43 has been added, which modulates the frequency-swept interrogation signal in amplitude. Microprocessor 44 generates the dataflow to be transmitted and controls the whole communication/ authentication process. In realizing microprocessor 44, it can be combined with microprocessor 23 in the receiver section.

**Claims**

1. A radio location system, **characterized in that** an interrogation transmitter transmits a frequency-swept interrogation signal to a label, which label includes an antenna, wherein the impedance of the antenna is modulated with a signal generated in a subcarrier generator, and wherein the signal re-transmitted by the antenna in the label is modulated and is received back in an interrogation receiver.

2. A radio location system according to claim 1, **characterized in that** by multiplication of the sideband frequencies of the received-back label signal with subcarrier frequency $f_{c0}$ by the meanwhile shifted transmitted signal with frequency $f_{c1}$, two difference frequencies arise, $f'_{lsb}$ and $f'_{usb}$, which possess mutually a difference in frequency which is proportional to the distance between the interrogation transmitter/receiver and the label.

3. A radio location system according to claim 2, **characterized in that** by alternately sweeping the frequency of the interrogation signal uniformly up and then uniformly down, in addition to the distance, also the radial velocity of a label relative to the interrogation transmitter/receiver can be determined.

4. A radio location system according to claim 2 or 3, **characterized in that** the subcarrier signal is modulated with a digitally coded label identification number.

5. A radio location system according to claim 4, **characterized in that** the subcarrier modulation is performed in the form of differential binary phase shift keying.

6. A radio location system according to one or more of the preceding claims, **characterized in that** the subcarrier signal is not present constantly, but only during a fraction of the time, at times determined stochastically, so that of all labels present in the working area, the position, velocity, and the identification number can be determined.

7. A radio location system according to one or more of the preceding claims, **characterized in that** the interrogation transmitter and one or more interrogation receivers are disposed separately, wherein the difference in the frequencies $f'_{lsb}$ and $f'_{usb}$ is proportional to the path length difference between on the one hand a directly received signal from the transmitter and on the other a signal which has been transmitted by the transmitter and has been received by the label and, modulated, has been re-transmitted by the label and has been received by the interrogation receiver.

Fig. 1

Fig. 2

Fig. 3

Fig. 4

Fig. 5

TX
FM-CW  6

2

24

7

I / Q
mixer  25

8

I    Q

$f'_{lsb}$
$f'_{usb}$
$\Delta f$

LSB  27

19

$f_{sub}$

$f'_{lsb}$

USB  28

19

$f_{sub}$

$f'_{usb}$

X  30

$2*\Delta f$

21

0

FFT
processor  22

Demodulator  29

µP  23

Fig. 6

EP 1 602 939 A1

Fig. 7

Fig. 8

Fig. 9

Fig. 10

Fig. 11

Fig. 12

**European Patent Office**

## EUROPEAN SEARCH REPORT

Application Number

EP 05 07 6301

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | VOSSIEK M ET AL: "PRECISE 3-D OBJECT POSITION TRACKING USING FMCW RADAR" 29TH EUROPEAN MICROWAVE CONFERENCE PROCEEDINGS. MUENCHEN, OCT. 5 - 7, 1999, PROCEEDINGS OF THE EUROPEAN MICROWAVE CONFERENCE, LONDON : MICROWAVE ENGINEERING EUROPE, GB, vol. VOL. 1 OF 3 CONF. 29, 5 October 1999 (1999-10-05), pages 234-237, XP009038799 ISBN: 0-86213-152-9 * the whole document * | 1-5 | G01S13/75 G07C9/00 |
| Y | US 2004/027240 A1 (GREEFF ROY ET AL) 12 February 2004 (2004-02-12) * abstract * * paragraphs [0002], [0007], [0013], [0039], [0042], [0054] - [0056], [0062] - [0064] * | 1-5 | |
| A | WO 03/102857 A (MARCONI INTELLECTUAL PROPERTY INC) 11 December 2003 (2003-12-11) * page 3, line 1 - line 15 * * page 5, line 12 - page 6, line 4 * * page 9, line 19 - page 10, line 8 * * page 17, line 13 - page 19, line 18 * * figure 7 * | 1,4,5,7 | TECHNICAL FIELDS SEARCHED (Int.Cl.7) G01S G07C |
| A | EP 1 365 259 A (HITACHI, LTD) 26 November 2003 (2003-11-26) * abstract * * paragraphs [0022] - [0028] * | 1,3 | |

-/--

The present search report has been drawn up for all claims

| Place of search | Date of completion of the search | Examiner |
|---|---|---|
| The Hague | 25 August 2005 | Roost, J |

EPO FORM 1503 03.82 (P04C01)

**European Patent Office**

## EUROPEAN SEARCH REPORT

Application Number

EP 05 07 6301

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 03/107256 A (BTG INTERNATIONAL LIMITED; DAVIDSON, WILLIAM, E; TURNER, CHRISTOPHER,) 24 December 2003 (2003-12-24) * abstract * * page 1, line 5 - page 2, line 33 * * page 4, line 16 - line 24 * ----- | 1,6 | |
| A | US 5 305 008 A (TURNER ET AL) 19 April 1994 (1994-04-19) * abstract * * column 6, line 34 - line 68 * * column 3, line 6 - line 41 * ----- | 1 | |

TECHNICAL FIELDS
SEARCHED     (Int.Cl.7)

The present search report has been drawn up for all claims

| Place of search | Date of completion of the search | Examiner |
|---|---|---|
| The Hague | 25 August 2005 | Roost, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................................
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 05 07 6301

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2005

| Patent document cited in search report | | Publication date | Patent family member(s) | | Publication date |
|---|---|---|---|---|---|
| US 2004027240 | A1 | 12-02-2004 | US | 6603391 B1 | 05-08-2003 |
| WO 03102857 | A | 11-12-2003 | AU | 2003273445 A1 | 19-12-2003 |
| | | | EP | 1509871 A1 | 02-03-2005 |
| | | | WO | 03102857 A2 | 11-12-2003 |
| | | | US | 2004043747 A1 | 04-03-2004 |
| EP 1365259 | A | 26-11-2003 | WO | 03075035 A1 | 12-09-2003 |
| | | | EP | 1365259 A1 | 26-11-2003 |
| | | | US | 2005128081 A1 | 16-06-2005 |
| | | | US | 2003164790 A1 | 04-09-2003 |
| WO 03107256 | A | 24-12-2003 | AU | 2003240091 A1 | 31-12-2003 |
| | | | EP | 1514221 A1 | 16-03-2005 |
| | | | WO | 03107256 A1 | 24-12-2003 |
| US 5305008 | A | 19-04-1994 | AU | 4611693 A | 18-11-1993 |

EPO FORM P0459

For more details about this annex : see Official Journal of the European Patent Office, No. 12/82